(19) Europäisches Patentamt / European Patent Office / Office européen des brevets

(11) **EP 3 766 322 B1**

(12) **EUROPEAN PATENT SPECIFICATION**

(45) Date of publication and mention
of the grant of the patent:
**03.05.2023 Bulletin 2023/18**

(21) Application number: **19768232.1**

(22) Date of filing: **11.03.2019**

(51) International Patent Classification (IPC):
*A01B 69/00* *(2006.01)*    *A01B 69/04* *(2006.01)*
*G05D 1/02* *(2020.01)*    *G01S 17/88* *(2006.01)*
*G06T 7/12* *(2017.01)*    *G06K 9/00* *(2022.01)*

(52) Cooperative Patent Classification (CPC):
**A01B 69/001; A01B 69/008; G01S 17/88**

(86) International application number:
**PCT/JP2019/009639**

(87) International publication number:
**WO 2019/176843 (19.09.2019 Gazette 2019/38)**

(54) **WORK VEHICLE AND CROP ROW IDENTIFICATION PROGRAM**

ARBEITSFAHRZEUG UND PROGRAMM ZUR IDENTIFIZIERUNG VON REIHENKULTUREN

VÉHICULE DE TRAVAIL ET PROGRAMME D'IDENTIFICATION DE RANGÉE DE CULTURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2018 JP 2018048451**

(43) Date of publication of application:
**20.01.2021 Bulletin 2021/03**

(73) Proprietor: **Yanmar Power Technology Co., Ltd.**
**Osaka-shi**
**Osaka 530-8311 (JP)**

(72) Inventors:
• **SUZUKI, Akihiro**
  **Osaka-shi, Osaka 530-8311 (JP)**
• **NAKAHATA, Akihiro**
  **Osaka-shi, Osaka 530-8311 (JP)**
• **YOKOUE, Toshiyuki**
  **Osaka-shi, Osaka 530-8311 (JP)**

(74) Representative: **Poindron, Cyrille et al**
**Novagraaf International SA**
**Chemin de l'Echo 3**
**1213 Onex (CH)**

(56) References cited:
**CN-A- 102 881 219**    **JP-A- H01 206 904**
**JP-A- H01 206 904**    **JP-A- 2006 101 816**
**JP-A- 2006 101 816**    **JP-A- 2011 139 644**
**JP-A- 2011 139 644**    **US-A1- 2018 017 965**

• **BARAWID ET AL: "Development of an Autonomous Navigation System using a Two-dimensional Laser Scanner in an Orchard Application", BIOSYSTEMS ENGINEERING, ELSEVIER, AMSTERDAM, NL, vol. 96, no. 2, 18 January 2007 (2007-01-18), pages 139-149, XP005735726, ISSN: 1537-5110, DOI: 10.1016/J.BIOSYSTEMSENG.2006.10.012**
• **ROSELL POLO J R ET AL: "A tractor-mounted scanning LIDAR for the non-destructive measurement of vegetative volume and surface area of tree-row plantations: A comparison with conventional destructive measurements", BIOSYSTEMS ENGINEERING, ELSEVIER, AMSTERDAM, NL, vol. 102, no. 2, 1 February 2009 (2009-02-01), pages 128-134, XP025924497, ISSN: 1537-5110, DOI: 10.1016/J.BIOSYSTEMSENG.2008.10.009 [retrieved on 2008-12-04]**

## Description

### TECHNICAL FIELD

This invention relates to a work vehicle and a crop row identification program.

### BACKGROUND ART

Patent Literature 1 discloses the feature of detecting a crop row with the use of a parallax image obtained by a stereo camera.

Patent Literature 2 discloses the feature of dividing an image collected by a vision module into a crop region and a non-crop region.

Patent Literature 3 discloses the feature of identifying a crop row in an image obtained by a camera.

### CITATION LIST

Patent Literature

Patent Literature 1: U.S. Patent No. 8855405
Patent Literature 2: U.S. Patent No. 8150574
Patent Literature 3: U.S. Patent Application Publication No. 2015/32169

### DISCLOSURE OF INVENTION

### PROBLEMS TO BE SOLVED BY THE INVENTION

In each of the aforementioned Patent Literatures 1 to 3, an image of a field photographed by a camera is used for identifying a crop row. However, in these Patent Literatures 1 to 3, since an image is photographed by a camera, for example, if the lighting conditions are not good, such as backlight or night, it becomes difficult to identify a crop row. In addition, the condition of the branches and leaves of the crop changes depending on the seasons. Since the photographed image also changes according to the change in the condition of a crop, it is difficult to stably identify a crop row when using an image photographed by a camera.

Document CN 102 881 219 A discloses a laser acquisition module comprising a laser range finder and an inertial measuring unit. The the laser range finder is used for obtaining the two-dimensional scan outline data of objects on every side.

An object of the present invention is to provide a work vehicle capable of stably identifying a crop row regardless of the environment of a field.

Another object of the present invention is to provide a crop row identification program capable of identifying a crop row with high accuracy.

### MEANS FOR SOLVING THE PROBLEMS

A work vehicle according to the present invention is a work vehicle that travels in a field where a crop row is planted, and includes a distance sensor configured to irradiate a plurality of objects present in the field with laser light and receive reflected light from the objects to thereby acquire distance information of each of the objects, an overhead image generating unit configured to detect a position of each of the objects on a basis of the distance information and generate an overhead image including the detected position of each of the objects as a detection point, a row candidate region generating unit configured to combine two or more detection points located within a predetermined distance from among the detection points included in the overhead image to thereby generate one or more row candidate regions extending in a crop row direction, and a crop row identifying unit configured to create a plurality of virtual points arranged in the crop row direction in each of the row candidate regions and identify a straight line corresponding to the crop row from the plurality of virtual points.

With this configuration, the distance sensor using laser light acquires the distance information of each object, and the overhead image of the field is generated on the basis of the acquired distance information. The crop row is identified on the basis of the generated overhead image. Therefore, the overhead image generated by this configuration is less susceptible to the environment of a field such as lighting conditions and seasons compared to an overhead image of a field generated on the basis of an image photographed by a camera. Consequently, with this configuration, it is possible to stably identify a crop row regardless of the environment of a field.

Moreover, with this configuration, a plurality of virtual points arranged in the crop row direction are created in each row candidate region, and a straight line corresponding to the crop row is identified from the plurality of virtual points. Therefore, even when detection points of objects other than crops such as weeds are included in the row candidate regions, it is possible to reduce the influence of such detection points of the objects other than crops when identifying the straight line corresponding to the crop row. This makes it possible to identify a crop row with high accuracy.

In one embodiment of the present invention, the row candidate region generating unit includes a shading processing unit configured to perform, on the overhead image, a shading process for expanding images of the detection points to combine a plurality of neighboring detection points, to generate one or more cluster images, and a selecting unit configured to select from the cluster images, an image that fulfills a predetermined selection condition, as a row candidate region. The predetermined selection condition is, for example, a condition that the size of a cluster image is equal to or larger than a predetermined value and the cluster image is long in the crop row direction.

In one embodiment of the present invention, the virtual points include, in the row candidate regions, a first virtual point arranged at both ends in the crop row direction, and a second virtual point including one point arranged between the both ends in the crop row direction or a plurality of points arranged between the both ends in the crop row direction at predetermined intervals.

With this configuration, the straight line corresponding to the row candidate regions can be estimated with high accuracy, and thus the crop row can be identified with high accuracy.

In one embodiment of the present invention, the first virtual point and the second virtual point arranged in the row candidate regions are created on the basis of an approximate quadrangle of the row candidate regions.

In one embodiment of the present invention, the crop row identifying unit includes a straight line estimating unit configured to estimate, for each of the row candidate regions, a straight line corresponding to the row candidate regions from the plurality of virtual points created for the row candidate regions, and a straight line combining unit configured to combine straight lines that mutually fulfill a predetermined combining condition from among straight lines corresponding to each of the row candidate regions estimated by the straight line estimating unit to thereby generate a straight line corresponding to the crop row. The predetermined combining condition is, for example, that the interval between two straight lines is less than or equal to a predetermined interval, and the difference between the slopes of the two straight lines is within a predetermined range.

With this configuration, when a plurality of row candidate regions is generated for the same crop row, the straight lines that mutually correspond to the row candidate regions are combined, and the straight line corresponding to the crop row can be thereby generated.

In one embodiment of the present invention, the crop row identifying unit is configured to identify at least two crop rows, and the work vehicle further includes a rectangle identification unit configured to identify a rectangle having the two crop rows as long sides when a distance between centers of gravity of the two crop rows is within a predetermined range.

With this configuration, it is possible to identify a row interval between two crop rows and the position of the work vehicle with respect to the two crop rows, on the basis of the identified rectangle.

A crop row identification program according to the present invention is a crop row identification program for identifying a crop row planted in a field, and causes a computer to function as an overhead image generating unit for detecting a position of each of the objects on a basis of information on a distance from a predetermined reference position to each of a plurality of objects present in the field and generate an overhead image including a detection point of each of the detected objects, a row candidate region generating unit for combining two or more detection points located within a predetermined distance from among the detection points included in the overhead image to thereby generate one or more row candidate regions extending in a crop row direction, and a crop row identifying unit for creating a plurality of virtual points arranged in the crop row direction in each of the row candidate regions, estimate straight lines corresponding to the row region candidate from the plurality of virtual points, and identify the crop row from the straight lines corresponding to each of the row candidate regions.

With this program, a plurality of virtual points arranged in the crop row direction are created in each row candidate region, and a straight line corresponding to the row region candidate is identified from the plurality of virtual points. Therefore, even when detection points of objects other than crops such as weeds are included in the row candidate regions, it is possible to reduce the influence of such detection points of the objects other than crops when estimating the straight line corresponding to the row candidate region. This makes it possible to identify a crop row with high accuracy.

In addition, with this deviation amount calculation program, a rectangle whose opposite sides are adjacent crop rows is identified, and the target travel route is set on the basis of the identified rectangle, and at the same time the current position of the work vehicle is estimated. Therefore, for example, when the slopes of adjacent crop rows change in the middle, such as when the adjacent crop rows bend in the middle, a rectangle according to a slope near the work vehicle in the adjacent crop rows is identified. This makes it possible to set a target travel route between adjacent crop rows corresponding to changes in the slopes of these crop rows, and to estimate the position of the work vehicle between the adjacent crop rows. In other words, with this configuration, it is possible to identify the own position of the work vehicle between the crop rows regardless of the condition of a field such as bending of the crop rows.

BRIEF DESCRIPTION OF DRAWINGS

FIG. 1 is a side view illustrating a schematic configuration of a work vehicle according to an embodiment of the present invention.
FIG. 2 is a front view illustrating a schematic configuration of the work vehicle of FIG. 1.
FIG. 3 is a schematic diagram illustrating how the work vehicle automatically travels in a field.
FIG. 4 is a block diagram illustrating a main electrical configuration of the work vehicle.
FIG. 5 is a block diagram illustrating an electrical configuration of a crop row identification processing unit.
FIG. 6 is a schematic perspective view illustrating a state where a laser light is emitted from a distance sensor to a crop included in a crop row.

FIG. 7 is a schematic plan view of FIG. 6 seen from above.

FIG. 8 is a schematic diagram illustrating an example of an overhead image generated by an overhead image generating unit.

FIG. 9 is a schematic diagram illustrating an example of a shaded image after noise removal generated by a shading processing unit.

FIG. 10 is a schematic diagram for explaining the operation of a straight line combining unit.

FIG. 11A is a schematic diagram for explaining a procedure of a rectangle identification process.

FIG. 11B is a schematic diagram for explaining the next procedure of FIG. 11A.

FIG. 11C is a schematic diagram for explaining the next procedure of FIG. 11B.

FIG. 11D is a schematic diagram for explaining the next procedure of FIG. 11C.

FIG. 12 is a schematic diagram for explaining the operation of a target setting unit.

FIG. 13 is a schematic diagram for explaining the operation of a deviation calculation unit.

FIG. 14 is a flowchart illustrating an overall procedure of an automatic travel control process by an automatic travel control unit.

FIG. 15 is a schematic diagram for explaining that a target direction can be corrected in accordance with a change in the slope of a crop row even when the slopes of adjacent crop rows change in the middle.

DESCRIPTION OF EMBODIMENTS

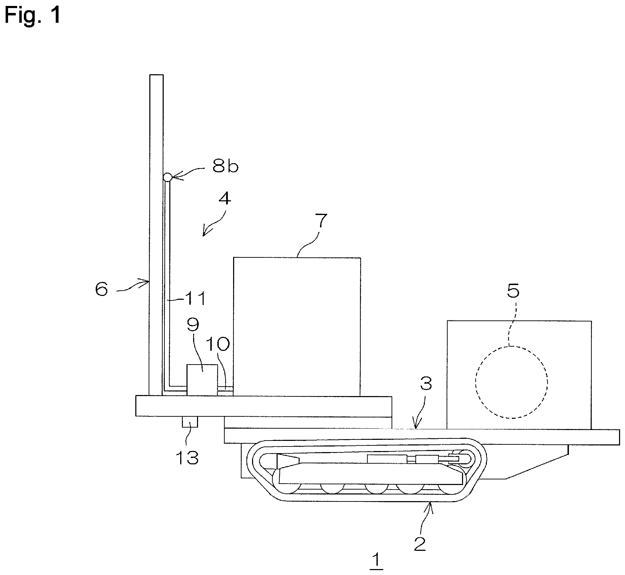

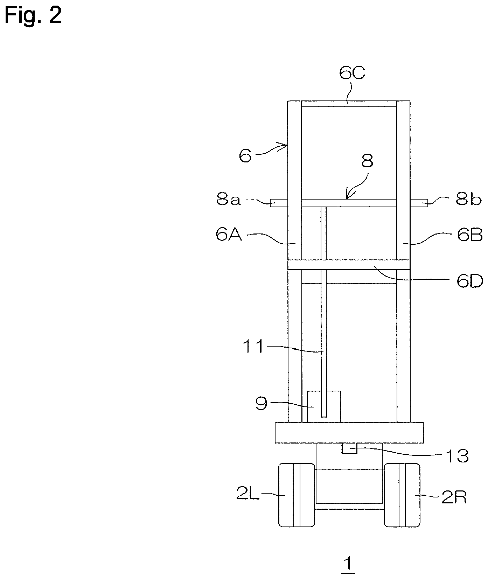

FIG. 1 is a side view illustrating a schematic configuration of a work vehicle according to an embodiment of the present invention. FIG. 2 is a front view illustrating a schematic configuration of the work vehicle of FIG. 1.

A work vehicle 1 is, in this embodiment, a work vehicle for spraying a chemical liquid. The work vehicle 1 includes a traveling device 2, a machine body frame 3 supported on the traveling device 2, and a chemical liquid spraying device 4 provided on the machine body frame 3. In this embodiment, the traveling device 2 is a crawler type, and includes right and left traveling devices 2L and 2R. The traveling device 2 may be a wheel type. Hereinafter, the schematic representation of a vehicle including a wheel type traveling device may be used as a schematic representation of the work vehicle 1.

An engine 5 as a drive source is disposed at the rear of the machine body frame 3. A support frame 6 is provided at the front of the machine body frame 3. The support frame 6 includes a pair of right and left masts 6A and 6B supported by the machine body frame 3, a first coupling member 6C that couples the upper ends of these masts 6A and 6B, and a second coupling member 6D that couples a length intermediate portions of these masts 6A and 6B.

The chemical liquid spraying device 4 includes a chemical liquid tank 7, a nozzle unit 8, and a pump unit 9. The chemical liquid tank 7 is disposed in the front-rear central portion on the machine body frame 3. The chemical liquid tank 7 stores a chemical liquid. The chemical liquid may be any liquid that is sprayed on crops or soil, and includes a pesticide, water, and the like. The nozzle unit 8 is attached to a position near the upper end of the support frame 6. The nozzle unit 8 is a hollow body that extends in the right-left direction and includes nozzles 8a and 8b for spouting the chemical liquid at both ends. The nozzle unit 8 is formed with a chemical liquid inlet (not illustrated).

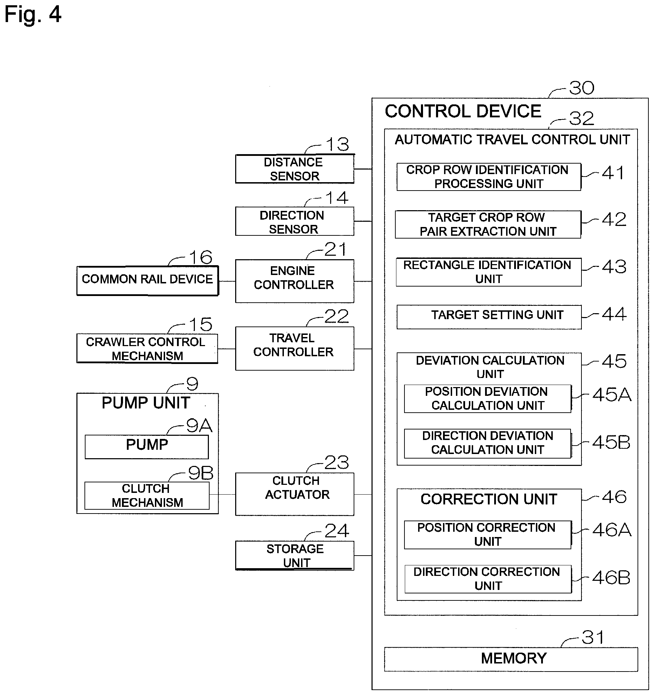

Although the pump unit 9 is not illustrated in FIGs. 1 and 2, in this embodiment, a pump 9A (see FIG. 4) which is rotationally driven by the power of the engine 5, a clutch mechanism 9B that transmits or shuts off the rotational force of the engine 5 to the pump 9A (see FIG. 4), and the like are included. The suction port of the pump 9A is connected to the chemical liquid tank 7 via a hose 10. The discharge port of the pump 9A is connected to the chemical liquid inlet of the nozzle unit 8 via a hose 11. When the pump 9A is rotationally driven, the chemical liquid in the chemical liquid tank 7 is supplied to the nozzle unit 8 via the pump 9A, and the chemical liquid is spouted from the nozzles 8a and 8b.

The work vehicle 1 is equipped with a distance sensor 13 for measuring a distance to an object and a direction sensor (posture sensor) 14 (see FIG. 4) for detecting a direction (posture) of the work vehicle 1. The distance sensor 13 is disposed at a width center position of the front of the work vehicle 1.

As the distance sensor 13, a sensor that measures a distance to an object with the use of laser light is used. In this embodiment, as the distance sensor 13, for example, a light, detection and ranging, or laser imaging detection and ranging (LIDAR) that measures a distance from a time it takes for a laser light to be illuminated in a pulse form and to be reflected by an object and return is used. In particular, in this embodiment, as the distance sensor 13, a scan sensor LIDAR is used that can also detect the direction of an object by scanning a laser light by changing its direction with a movable mirror.

A gyro sensor, a geomagnetic sensor, an inertial measurement unit (IMU), or the like can be used as the direction sensor (posture sensor) 14.

Although not illustrated in FIGs. 1 and 2, the work vehicle 1 is provided with a crawler control mechanism 15 (see FIG. 4) that transmits the driving force of the engine 5 to the right and left traveling devices 2L and 2R to independently control the right and left traveling devices 2L and 2R. The crawler control mechanism 15 is a mechanism for driving the right and left traveling devices 2L and 2R independently to thereby move the work vehicle 1 forward, backward, and turn. Specifically, when the right and left traveling devices 2L and 2R are rotationally driven in a same direction and at a same speed by the crawler control mechanism 15, the work vehicle 1 moves forward or backward. Meanwhile, when the right and left traveling devices 2L and 2R are rotationally driven in a same direction at a different speed or the right and left traveling devices 2L and 2R are rotationally driven in an opposite direction by the crawler control mechanism 15, the work vehicle 1 turns.

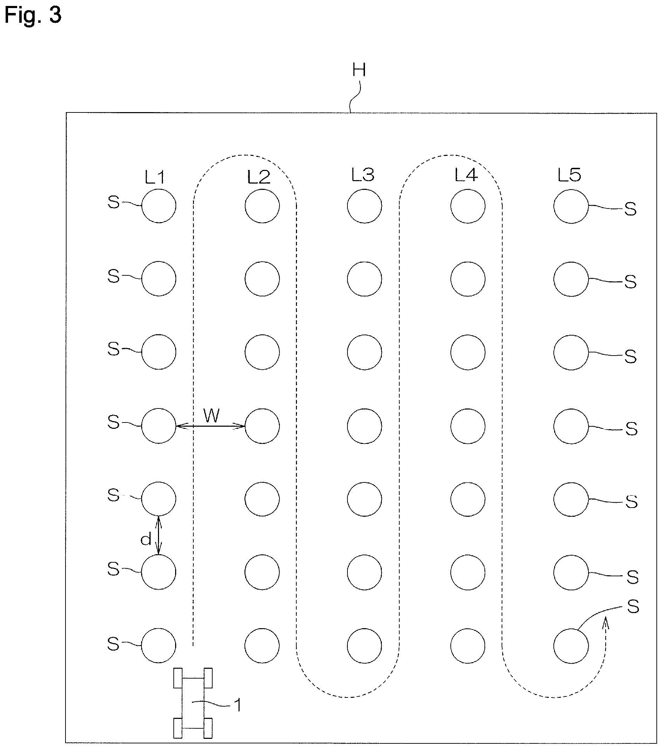

In this embodiment, as illustrated in FIG. 3, the work vehicle 1 automatically travels in a field H where a crop S is planted in a row and sprays a chemical liquid on the crop S. In this embodiment, the crop S is a fruit tree and the field H is an orchard. In this description, the row of the crop S is referred to as a crop row L. In the example of FIG. 3, the row of the crop S arranged vertically is the crop row L. In the field H, five crop rows L1 to L5 are laterally planted at intervals. In each crop row L1 to L5, a plurality of crops S are arranged at substantially equal intervals. These crop rows L1 to L5 are referred to as a first crop row L1, a second crop row L2, a third crop row L3, a fourth crop row L4, and a fifth crop row L5 in order from the left. In addition, of the spaces between adjacent crop rows, the lower side end of FIG. 3 is called a front side end, and the upper side end of FIG. 3 is called a back side end.

For example, the work vehicle 1 automatically travels between crop rows toward the back side end while using, for example, a vicinity of the front side end between the first crop row L1 and the second crop row L2, as an automatic travel start position and setting a target travel route between these crop rows. When the work vehicle 1 reaches the back side end between the crop rows, the work vehicle 1 turns to the right in the traveling direction, and moves to the back side end between the second crop row L2 and the third crop row L3. Then, the work vehicle 1 automatically travels between crop rows toward the front side end while setting the target travel route between the second crop row L2 and the third crop row L3.

When the work vehicle 1 reaches the front side end between the crop rows L2 and L3, the work vehicle 1 turns to the left toward the traveling direction and moves to the front side end between the third crop row L3 and the fourth crop row L4. Then, the work vehicle 1 automatically travels between crop rows toward the back side end while setting the target travel route between the third crop row L3 and the fourth crop row L4. By the same operation, the work vehicle 1 moves as illustrated by the broken line in FIG. 3. Then, for example, after the work vehicle 1 reaches the front side end between the fourth crop row L4 and the fifth crop row L5 and turns to the left toward the traveling direction, the automatic traveling is stopped. During automatic traveling, the pump 9A is driven via the clutch mechanism 9B, and the chemical liquid is ejected from the nozzles 8a and 8b.

In the following, between certain adjacent crop rows, of the front side end and the back side end between the crop rows, the end on the side where the work vehicle 1 starts traveling may be referred to as a traveling start end between the crop rows, and the end on the side opposite to the traveling start end may be called a traveling termination end between the crop rows. In addition, an interval W between adjacent crop rows may be referred to as a row interval. Moreover, an interval d between two adjacent crops in a same crop row L may be referred to as a trunk interval.

It is possible for a user or the like to remotely control the work vehicle 1 by operating a remote control device (not illustrated), but such remote control technique is well known. Thus, the description of the specific configuration for performing a remote control is omitted.

FIG. 4 is a block diagram illustrating a main electrical configuration of the work vehicle 1.

The work vehicle 1 includes a control device 30 for controlling the operation of the work vehicle 1.

Connected to the control device 30 are the distance sensor 13, a direction sensor 14, an engine controller 21, a travel controller 22, a clutch actuator 23, a storage unit 24, and the like.

As described above, the distance sensor 13 detects information on a distance from the work vehicle to each of a plurality of objects present in the field H. The main target of the plurality of objects is the crop S. The direction sensor 14 is, as described above, for detecting the direction of the work vehicle 1.

The engine controller 21 controls the number of revolutions of the engine 5, or the like. Specifically, the engine controller 21 controls a common rail device 16 as a fuel injection device provided in the engine 5, thereby controlling the number of revolutions of the engine 5. The engine controller 21 controls the common rail device 16, and thereby can also stop the supply of fuel to the engine 5 and stop the drive of the engine 5.

The travel controller 22 controls forward, backward, turning, and stopping of the work vehicle 1 by controlling the crawler control mechanism 15. The clutch actuator 23 is for fastening and releasing the clutch mechanism 9B in the pump unit 9. The storage unit 24 includes a storage device such as a hard disk and a non-volatile memory.

The control device 30 includes a microcomputer including a central processing unit (CPU) and a memory (read-only memory, or ROM, random-access memory, or RAM, etc.) 31. The control device 30 includes an automatic travel control unit 32 for causing the work vehicle 1 to automatically travel along a target travel route while setting the target travel route between adjacent crop rows L in the field H. The automatic travel control unit 32 includes a crop row identification processing unit 41, a target crop row pair extraction unit 42, a rectangle identification unit 43, and a target setting unit 44, a deviation calculation unit 45, and a correction unit 46.

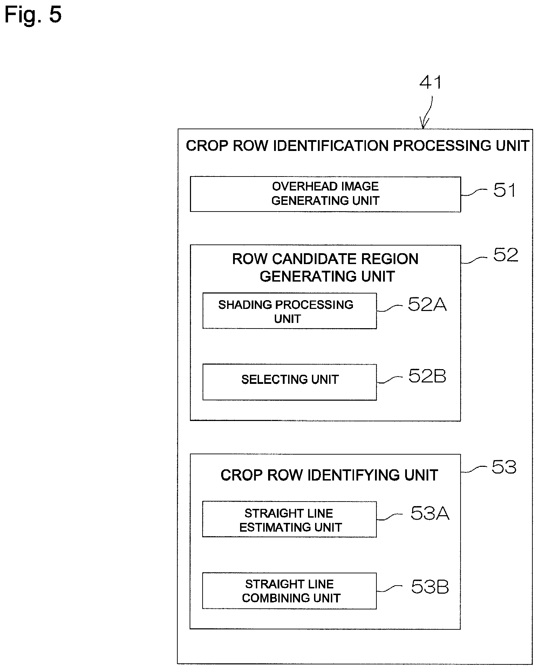

The crop row identification processing unit 41 performs a process for identifying a plurality of crop rows L in the field H on the basis of the information on a distance to each object detected by the distance sensor 13. The crop row identification processing unit 41 includes, as illustrated in FIG. 5, an overhead image generating unit 51, a row candidate region generating unit 52, and a crop row identifying unit 53.

The overhead image generating unit 51 detects the position of each object on the basis of information on a distance to each object detected by the distance sensor 13, and generates an overhead image including the position of each detected object as a detection point. Hereinafter, the operation of the overhead image generating unit 51 will be described in detail.

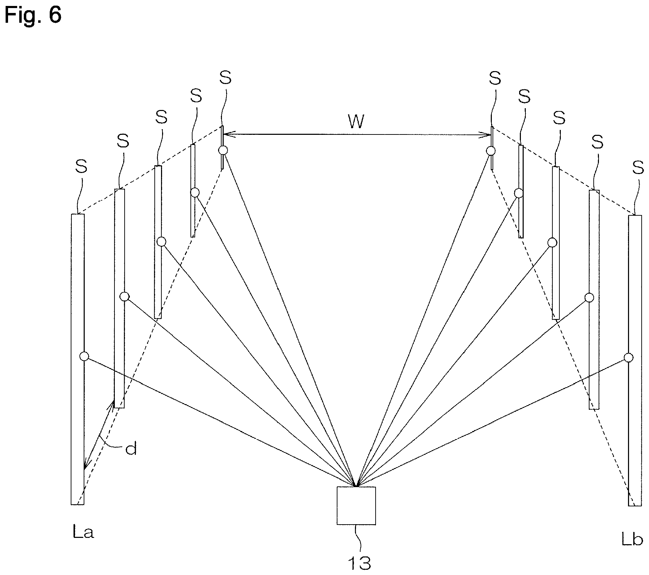

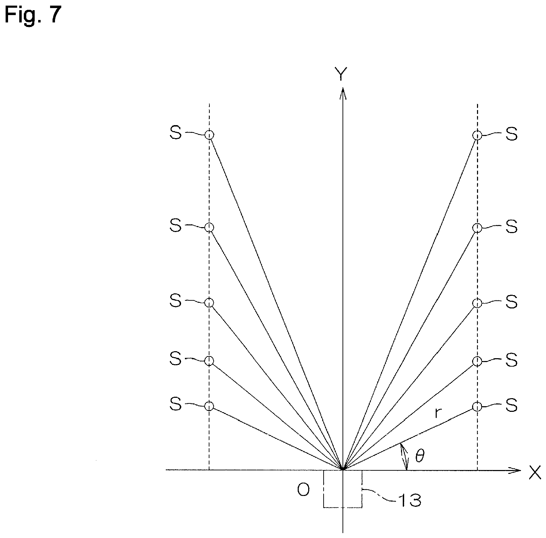

FIG. 6 is a schematic perspective view illustrating a state where a laser light is emitted from the distance sensor 13 to the crop S included in a crop row. FIG. 7 is a schematic plan view of FIG. 6 seen from above. FIGs. 6 and 7 illustrate two adjacent crop rows La and Lb.

Referring to FIG. 7, a coordinate system in which a laser light output position at the distance sensor 13 is an origin O, a straight line passing through the origin O and parallel to the right-left direction of the work vehicle 1 is an X axis, and a straight line passing through the origin O and parallel to the front-rear direction of the work vehicle 1 is a Y axis is called a sensor coordinate system.

The laser light is emitted from the distance sensor 13 in a different direction. A laser light emitting direction (emission angle) $\theta$ is an angle between the +X axis and the laser light, and expressed as an angle counterclockwise around the origin O. When the laser light is output at the emission angle $\theta$ and a distance r to a certain object is detected, the combination of the distance r and the emission angle $\theta$ $(r, \theta)$ is acquired as distance information for the object. The X coordinate value x and the Y coordinate value y of the sensor coordinate system of the object whose distance information is $(r, \theta)$ are expressed by the following formula (1).

$$x = \mathrm{rcos}\theta$$
$$y = \mathrm{rsin}\theta \qquad \dots (1)$$

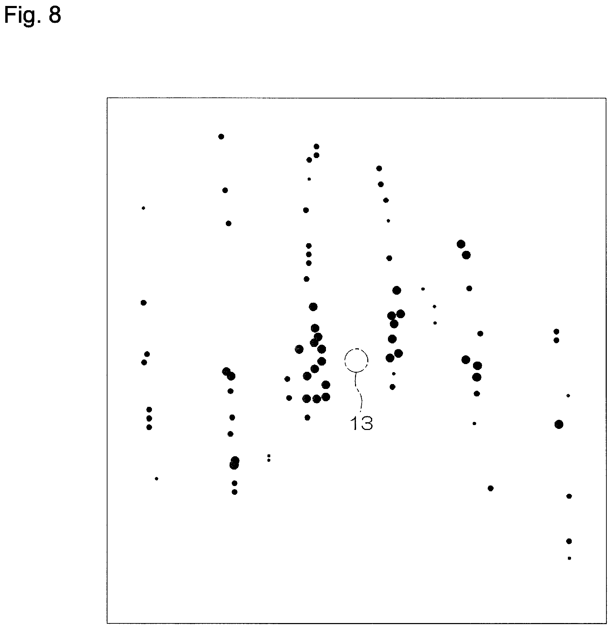

The overhead image generating unit 51 detects the position of each object for which the distance from the distance sensor 13 has been detected, on the basis of the aforementioned formula (1). Then, the overhead image generating unit 51 generates an overhead image including the position of each object as a detection point. FIG. 8 is a schematic diagram illustrating an example of the overhead image generated by the overhead image generating unit 51.

Referring back to FIG. 5, the row candidate region generating unit 52 combines two or more detection points located within a predetermined distance from among the detection points included in the overhead image to thereby generate one or more row candidate regions extending in a crop row direction. Specifically, the row candidate region generating unit 52 includes a shading processing unit 52A and a selecting unit 52B.

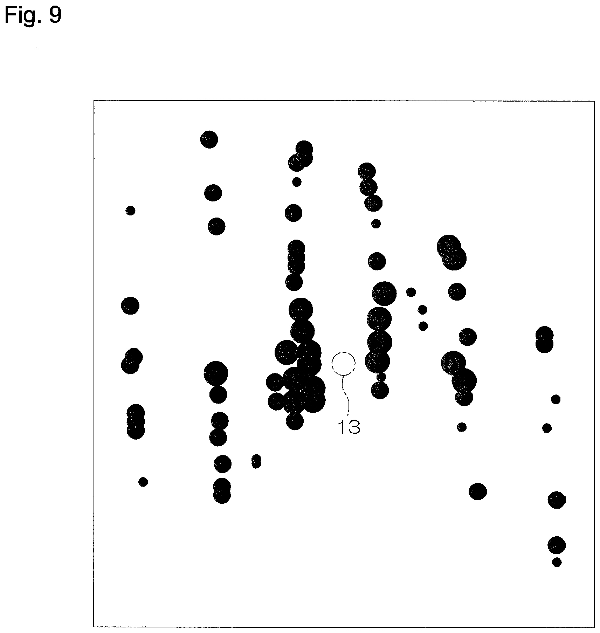

The shading processing unit 52A performs, on the overhead image, a shading process for expanding images of the detection points to combine a plurality of neighboring detection points, to generate one or more cluster images. In this embodiment, the shading processing unit 52A performs a shading process on the overhead image with the use of a Gaussian filter to thereby generate a shaded image including a multivalued image. Then, the shading processing unit 52A converts the shaded image including a multivalued image into a shaded image including a binary image with the use of a predetermined threshold value in order to remove noise. The shaded image including a binary image may be referred to as a shaded image after noise removal. FIG. 9 is a schematic diagram illustrating an example of the shaded image after noise removal generated by the shading processing unit 52A.

Referring back to FIG. 5, the selecting unit 52B selects from the cluster images included in the shaded image after noise removal, an image that fulfills a predetermined selection condition, as the row candidate regions. The predetermined selection condition is, for example, a condition that the size of a cluster image is equal to or larger than a predetermined value and the cluster image is long in the crop row direction. In this embodiment, the condition that the cluster image is long in the crop row direction is a condition that the cluster image is longer in the Y axis direction than in the X axis direction of the sensor coordinate system, and can be determined, for example, from the aspect ratio of the cluster image. The selecting unit 52B may approximate a row candidate region to a rectangle, and determine whether the row candidate region fulfills the selection condition on the basis of the area of the approximate rectangle and the aspect ratio.

Referring back to FIG. 5, the crop row identifying unit 53 creates a plurality of virtual points arranged in the crop row direction in each of the row candidate regions and identifies a straight line corresponding to the crop row from the plurality of virtual points. The crop row identifying unit 53 includes a straight line estimating unit 53A and a straight line combining unit 53B.

The straight line estimating unit 53A estimates, for each row candidate region, a straight line corresponding to the row candidate region from a plurality of virtual points created for the row candidate region. The straight line estimating unit 53A estimates a straight line corresponding to a certain row candidate region, for example, as follows. That is, the straight line estimating unit 53A approximates the row candidate region to a quadrangle. In this embodiment, for convenience of explanation, the straight line estimating unit 53A approximates the row candidate region to a quadrangle (a rectangle, a parallelogram or a trapezoid) that has two parallel sides (hereinafter, referred to as long sides) whose inclination is closer to the Y axis than the X axis. Next, the straight line estimating unit 53A arranges a first virtual point at four corners of the row candidate region and at the same time sets a second virtual point on a straight line passing through the center of the approximate quadrangle and parallel to a long side at predetermined intervals. Then, the straight line estimating unit 53A approximates the straight line from the first virtual point and the second virtual point, and estimates the obtained straight line as the straight line of the row candidate region. The predetermined interval is set to a preset trunk interval d, for example. The second virtual point may include one point corresponding to the center of gravity of the approximate quadrangle.

The straight line combining unit 53B combines straight lines that mutually fulfill a predetermined combining condition from among straight lines corresponding to each of the row candidate regions estimated by the straight line estimating unit 53A to thereby generate a straight line corresponding to the crop row. The predetermined combining condition is, for example, that the interval between two straight lines is less than or equal to a predetermined interval, and the difference between the slopes of the two straight lines is within a predetermined range. Whether the distance between the two straight lines is less than or equal to a predetermined interval is determined by, for example, whether the deviation amount of the X coordinate values of the center of gravity (midpoint) of them is less than or equal to a predetermined value.

Specifically, the straight line combining unit 53B determines whether the straight lines corresponding to certain two row candidate regions fulfill the combining condition. If the straight lines fulfill the combining condition, the straight line combining unit 53B combines the two straight lines. The straight line combining unit 53B repeats such process. In this way, the straight lines of a plurality of row candidate regions that are presumed to be present on the same crop row are combined. As a result, a straight line corresponding to each crop row is generated. In other words, each crop row is identified.

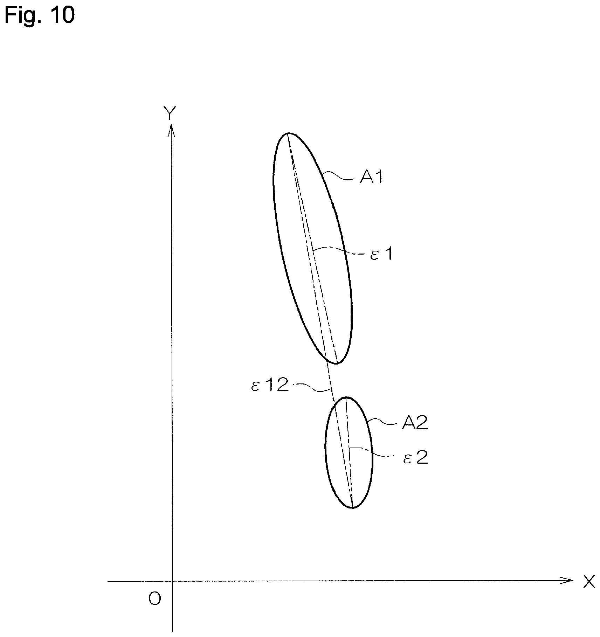

For example, as illustrated in FIG. 10, suppose that there are two row candidate regions A1 and A2 arranged in the direction along the Y axis, and lines estimated by the straight line estimating unit 53A for these row candidate regions A1 and A2 are ε1 and ε2, respectively. In this case, if the straight line ε1 and the straight line ε2 fulfill the combining condition, these straight lines ε1 and ε2 are combined into one straight line.

For example, as illustrated by a chain line ε12 in FIG. 10, the two straight lines ε1 and ε2 are combined by combining a point with the smallest Y coordinate value and a point with the largest Y coordinate value among the points on these straight lines ε1 and ε2. The combining of the two straight lines ε1 and ε2 may be performed by an other method. For example, the combining of the two straight lines ε1 and ε2 may be performed by obtaining one straight line from four end points of both end points of the straight line ε1 and both end points of the straight line ε2.

Referring back to FIG. 4, the target crop row pair extraction unit 42 extracts, as a target crop row pair, two adjacent crop row pairs used to generate the target travel route of the work vehicle 1, from the plurality of crop rows L identified by the crop row identifying unit 53. Specifically, the target crop row pair extraction unit 42 first sets a crop row pair in which the distance between the centers of gravity of adjacent crop rows L is within a predetermined range, as a pair candidate. More specifically, the target crop row pair extraction unit 42 sets a crop row pair in which the difference between the X coordinate values of the center of gravity (midpoint) of the adjacent crop rows L is within a predetermined range, as a pair candidate. The predetermined range is set from a length shorter than the currently set row interval W by a predetermined length to a length longer than the row interval W by a predetermined length.

Next, the target crop row pair extraction unit 42 extracts, as a target crop row pair, for example, a pair candidate that is arranged in such a manner that two adjacent crop rows sandwich a straight line passing through the right-left center of the work vehicle 1 and extending in the front-rear direction of the work vehicle 1.

Next, the rectangle identification unit 43 identifies the target crop row pair as a rectangle (a rectangle or a square) whose opposite sides are two crop rows constituting the target crop row pair. In other words, the rectangle identification unit 43 identifies a rectangle that approximates the target crop row pair. Hereinafter, this process is called a rectangle identification process. In the following, one of the two adjacent sides of the rectangle is called a first side, and the other side is called a second side.

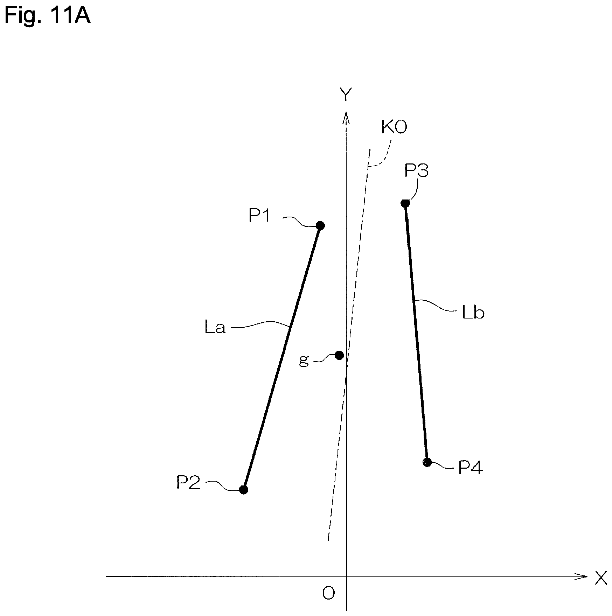

Hereinafter, an example of the rectangle identification process will be described with reference to FIGs. 11A to 11D.

For example, two crop rows La and Lb are selected as the target crop row pair as illustrated in FIG. 11A. The rectangle identification unit 43 first calculates a center of gravity g and a slope a of the target crop row pair. Specifically, the rectangle identification unit 43 acquires the coordinates of end points P1 and P2 of the crop row La and the coordinates of end points P3 and P4 of the crop row Lb. Then, the rectangle identification unit 43 calculates the center of gravity of a quadrangle having these four points as vertices as the center of gravity g of the target crop row pair. The slope a of the target crop row pair is, for example, the slope of a straight line K0 that passes through almost the center between the two crop rows La and Lb, and can be calculated by, for example, a least-squares method. In the following, the slope a of the target crop row pair thus calculated may be referred to as a "first slope a1".

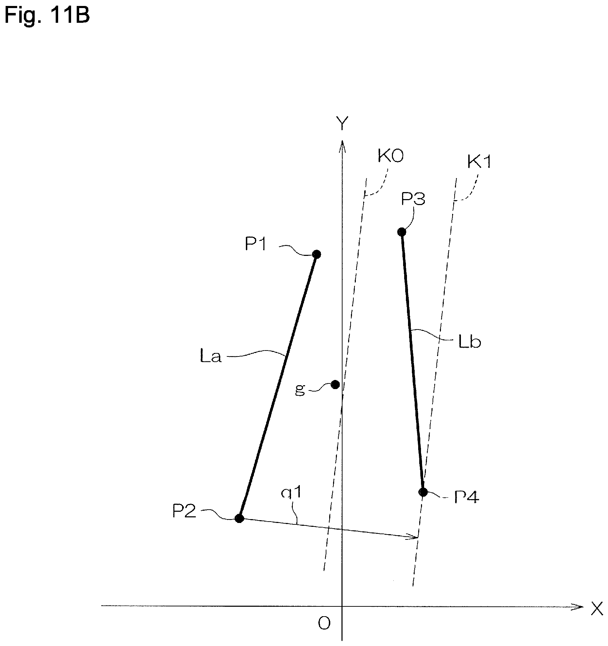

Next, as illustrated in FIG. 11B, the rectangle identification unit 43 obtains a first straight line K1 passing through an end point (P4 in this example) having the largest X coordinate value among the end points P1 to P4 and having a first slope a1. Then, the rectangle identification unit 43 calculates the distance between the first straight line K1 and an end point (P2 in this example) having the smallest X coordinate value among the end points P1 to P4, as a length q1 of the first side.

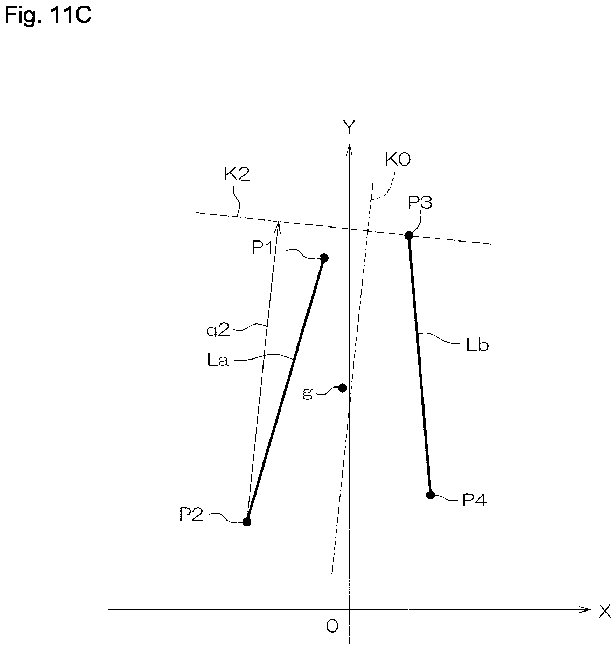

Next, the rectangle identification unit 43 obtains the slope of a straight line orthogonal to the straight line having the first slope a1 in the XY plane, as a second slope a2. Then, as illustrated in FIG. 11C, the rectangle identification unit 43 obtains a second straight line K2 passing through an end point (P3 in this example) having the largest Y coordinate value among the end points P1 to P4 and having the second slope a2. Then, the rectangle identification unit 43 calculates the distance between the second straight line K2 and an end point (P2 in this example) having the smallest Y coordinate value among the end points P1 to P4, as a length q2 of the second side.

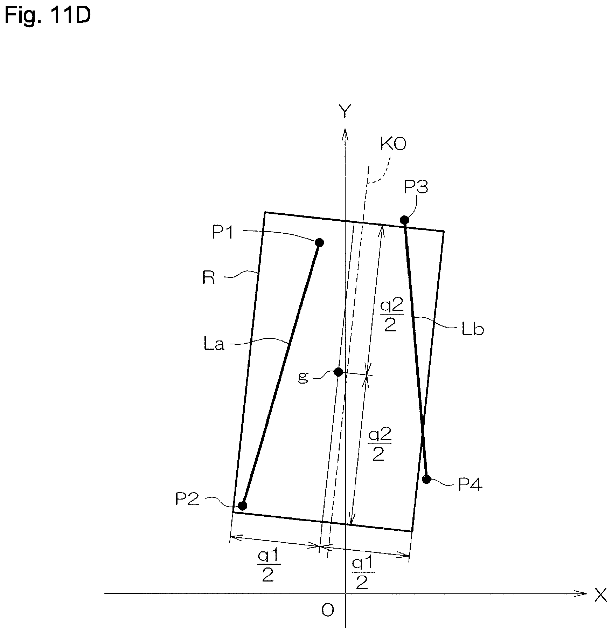

Finally, the rectangle identification unit 43 identifies, as a rectangle that approximates the target crop row pair, a rectangle having the aforementioned center of gravity g as the center of gravity, the first side whose slope is the second slope a2 and whose length is q1, and the second side whose slope is the first slope a1 and whose length is q2. In the case of the target crop row pair in FIG. 11A, a rectangle that approximates this target crop row pair will be as illustrated by R in FIG. 11D.

The rectangle identification unit 43 may obtain a rectangle that approximates the target crop row pair by a method other than the method described above. As a method for obtaining the rectangle that approximates the target crop row pair, for example, various methods described as the background art and various methods described as the embodiments of Japanese Unexamined Patent Application Publication No. 2010-108135 can be used.

Referring back to FIG. 4, the target setting unit 44 sets the target travel route and the target direction of the work vehicle 1 between the two crop rows constituting the selected crop row pair, on the basis of the rectangle identified by the rectangle identification unit 43.

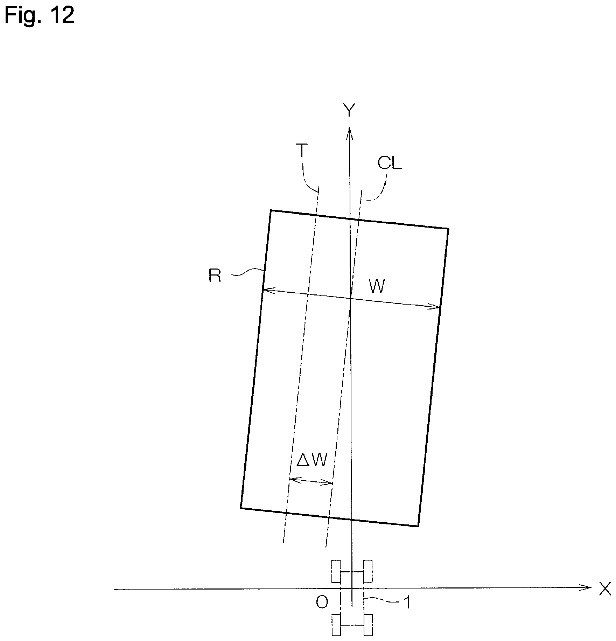

Specifically, the target setting unit 44 specifies the interval between the right and left sides of a rectangle R as a row interval W of the target crop row pair, as illustrated in FIG. 12. In addition, the target setting unit 44 specifies the straight line that passes through the center of the right and left sides of the rectangle R, as a center line CL of the target crop row pair. Then, the target setting unit 44 sets, as a target travel route T, a straight line deviated to the side of one crop row (the left crop row La in the example of FIG. 12) by a predetermined offset amount $\Delta W$, and at the same time sets a direction along the target travel route T as the target direction.

The direction for deviating by the offset amount $\Delta W$ with respect to the center line CL differs depending on the target crop row pair. For example, when the first crop row L1 and the second crop row L2 in FIG. 3 are the target crop row pair, the direction for deviating by the offset amount $\Delta W$ with respect to the center line CL is the direction of the first crop row L1 side (left side toward the traveling direction). Meanwhile, when the second crop row L2 and the third crop row L3 in FIG. 3 are the target crop row pair, direction for deviating by the offset amount $\Delta W$ with respect to the center line CL is the direction of the second crop row L2 side (right side toward the traveling direction).

Referring back to FIG. 4, the deviation calculation unit 45 calculates a deviation amount from the target travel route T and the deviation amount from the target direction. The deviation calculation unit 45 includes a position deviation calculation unit 45A and a direction deviation calculation unit 45B. The position deviation calculation unit 45A estimates the current position of the work vehicle 1 between the two crop rows constituting the target crop row pair on the basis of the rectangle R identified by the rectangle identification unit 43, and calculates a deviation amount (position deviation amount) of the current position from the target travel route. The direction deviation calculation unit 45B calculates a deviation amount (direction deviation amount) of the current direction the work vehicle 1 detected by the direction sensor 14 from the target direction.

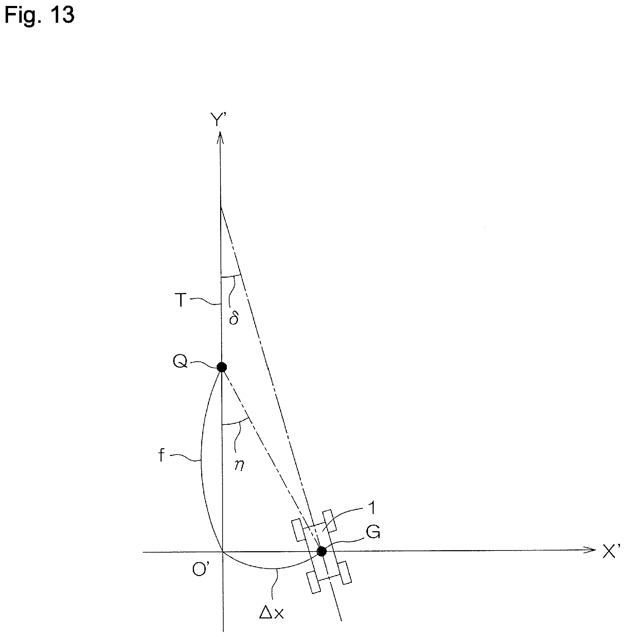

Specifically, as illustrated in FIG. 13, the position deviation calculation unit 45A converts the position and direction of the work vehicle 1 in the sensor coordinate system, into the position and direction of the crop row coordinate system in which the target travel route T is a Y' axis and a line that is orthogonal to the Y' axis and passes through the center of gravity of the work vehicle 1 is an X' axis. The converted position and direction of the work vehicle 1 correspond to the current position and direction of the work vehicle 1 between the two crop rows constituting the target crop row pair.

Next, as illustrated in FIG. 13, the position deviation calculation unit 45A sets, as a target position Q, a position that has advanced in the traveling direction by a predetermined distance f along the target travel route T from the origin O' of the crop row coordinate system. Then, the position deviation calculation unit 45A calculates an angle $\eta$ between the straight line connecting the target position Q and the center of gravity position G of the work vehicle 1 and the Y' axis, as the position deviation amount (position deviation angle) of the work vehicle 1 with respect to the target travel route T. If the distance between the origin O' and the center of gravity position G of the work vehicle 1 is $\Delta x$, the position deviation amount $\eta$ can be calculated from the following formula (2).

$$\eta = \cos^{-1}\{f / (\Delta x^2 + f^2)^{1/2}\} \qquad \dots (2)$$

The direction deviation calculation unit 45B calculates an angle $\delta$ formed by the orientation (front-rear direction) of the work vehicle 1 and the target direction (Y' axis) as the direction deviation amount. The direction deviation amount $\delta$ can be calculated in the same manner as the position deviation amount $\eta$ by obtaining a Y' coordinate value of the intersection of the Y' axis and a straight line passing through the center of gravity G of the work vehicle 1 and extending in the front-rear direction of the work vehicle 1

Referring back to FIG. 4, the correction unit 46 includes a position correction unit 46A and a direction correction unit 46B. The position correction unit 46A corrects the position of the work vehicle 1 between the crop rows in such a manner that the position approaches the target travel route T, on the basis of the position deviation amount η calculated by the position deviation calculation unit 45A. The direction correction unit 46B corrects the direction of the work vehicle 1 between the crop rows in such a manner that the direction approaches the target direction, on the basis of the direction deviation amount δ calculated by the direction deviation calculation unit 45B. That is, in this embodiment, the correction unit 46 controls the crawler control mechanism 15 in such a manner that the position deviation amount η approaches zero and the direction deviation amount δ approaches zero.

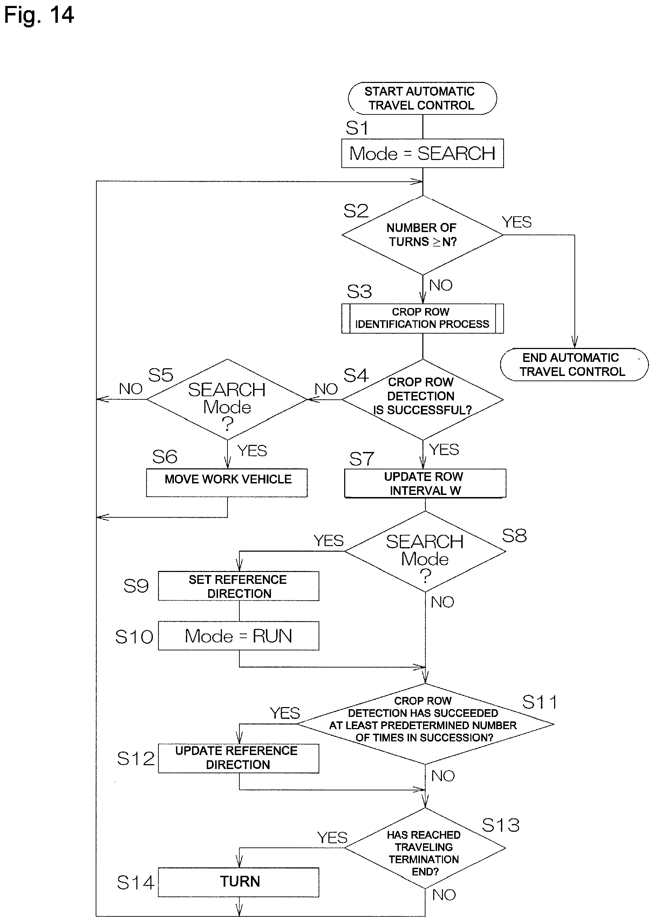

FIG. 14 is a flowchart illustrating an overall procedure of an automatic travel control process by the automatic travel control unit 32.

The operation modes of the work vehicle 1 include a search mode and a run mode. The search mode refers to a mode for setting the target travel route and target direction, and the like by performing a crop row identification process before entering between crop rows. The crop row identification process refers to a process performed by the crop row identification processing unit 41, target crop row pair extraction unit 42, rectangle identification unit 43, target setting unit 44, and deviation calculation unit 45 to set the target travel route T and target direction and calculate the row interval W, the position deviation amount η from the target travel route T, the direction deviation amount δ from the target direction, and the like.

The run mode is a mode in which the work vehicle 1 caused to travel in such a manner that the position deviation amount η and the direction deviation amount δ approach zero while performing the crop row identification process.

When performing an automatic travel control, the user sets the row interval W and a target number of turns N to the work vehicle 1. The target number of turns N is the number of turns of the work vehicle 1 expected to be performed before the work vehicle 1 reaches a position at which automatic operation should be stopped after it is started. The row interval W and the target number of turns N set by the user are stored in the memory 31. In addition, the user moves the work vehicle 1 to the vicinity of the start position of automatic travel by, for example, a remote control. Then, the user starts the automatic travel control by, for example, a remote control.

When the automatic travel control is started, the automatic travel control unit 32 sets the operation mode to a search mode (step S1). Then, the automatic travel control unit 32 determines if the number of turns of the work vehicle 1 has reached the target number of turns N.

If the number of turns of the work vehicle 1 has not reached the target number of turns N (step S2: NO), the automatic travel control unit 32 performs the crop row identification process described above (step S3).

Next, the automatic travel control unit 32 determines whether the crop row detection is successful (step S4). Specifically, the automatic travel control unit 32 determines that the crop row detection is successful if a success or failure condition is fulfilled in which the position deviation amount η calculated by the crop row identification process is within a first predetermined range and the direction deviation amount δ calculated by the crop row identification process is within a second predetermined range. On the other hand, if the target crop row pair is not specified by the crop row identification process, or if the target crop row pair is specified and the success or failure determination condition is not fulfilled, the automatic travel control unit 32 determines that the crop row detection has failed.

When it is determined that the crop row detection has failed (step S4: NO), the automatic travel control unit 32 determines whether the operation mode is the search mode (step S5). If the operation mode is the search mode (step S5: YES), the automatic travel control unit 32 changes the position of the work vehicle 1 and moves the work vehicle 1 again to perform the crop row identification process (step S6).

Specifically, the automatic travel control unit 32 may simply retract the work vehicle 1 by a predetermined amount when the target crop row pair is not specified in the crop row identification process of step S3. On the other hand, when the target crop row pair is specified in the crop row identification process of step S3, the automatic travel control unit 32 may move the work vehicle 1 to the center position side between the two crop rows constituting the target crop row pair. When the process of step S6 is completed, the automatic travel control unit 32 returns to step S2.

In step S5, if it is determined that the operation mode is the run mode (step S5: NO), the automatic travel control unit 32 returns to step S2.

In step S4, if it is determined that the crop row detection is successful (step S4: YES), the automatic travel control unit 32 updates the row interval W in the memory 31 (step S7). Specifically, the automatic travel control unit 32 rewrites the row interval W stored in the memory 31 to the row interval W acquired by the crop row identification process of step S3.

Next, the automatic travel control unit 32 determines whether the operation mode is the search mode (step S8). If the operation mode is the search mode (step S8: YES), the automatic travel control unit 32 sets a reference direction (step S9). Specifically, the automatic travel control unit 32 uses the direction deviation amount δ calculated in step S3 and the direction of the work vehicle 1 currently detected by the direction sensor 14 to convert the target direction set in step S3 into the direction detected by the direction sensor 14. Then, the automatic travel control unit 32 stores the converted direction in the memory 31 as the reference direction. In this way, the difference between the direction of the work vehicle 1 detected by the direction sensor 14 and the reference direction can be detected as the direction deviation amount of the direction of the work vehicle 1 with respect to the target direction.

Next, the automatic travel control unit 32 sets the operation mode to the run mode (step S10). Then, the automatic travel control unit 32 proceeds to step S11. In the run mode, the correction unit 46 of the automatic travel control unit 32 controls the crawler control mechanism 15 in such a manner that the position deviation amount η and the direction deviation amount δ approach zero.

In step S8, if it is determined that the operation mode is the run mode (step S8: NO), the automatic travel control unit 32 proceeds to step S11. In step S11, the automatic travel control unit 32 determines whether the determination result of step S4 is that the crop row detection has succeeded at least a predetermined number of times in succession.

If the determination result in step S4 is that the crop row detection has succeeded at least a predetermined number of times in succession (step S11: YES), the automatic travel control unit 32 updates the reference direction (step S12). Specifically, the automatic travel control unit 32 uses the direction deviation amount δ set in step S3 and the direction of the work vehicle 1 currently detected by the direction sensor 14 to convert the target direction set in step S3 into the direction detected by the direction sensor 14. Then, the automatic travel control unit 32 rewrites the reference direction stored in the memory 31 to the converted direction. After this, the automatic travel control unit 32 proceeds to step S13.

In step S11, if it is determined that the determination result of step S4 is not that the crop row detection has succeeded at least a predetermined number of times in succession (step S 11: NO), the automatic travel control unit 32 does not update the reference direction, and proceeds to step S13. The reference direction is updated only if the determination result of step S4 is that the crop row detection has succeeded at least a predetermined number of times in succession. This is to prevent the reference direction from being updated when the crop row identification process is not performed accurately due to the effect of noise, or the like.

In step S13, the automatic travel control unit 32 determines whether the work vehicle 1 has reached the traveling termination end (row end) between the crop rows. The automatic travel control unit 32 starts to measure the traveling distance, for example, when the work vehicle 1 reaches a front position by a predetermined distance from the traveling termination end between the target crop row pair, and determines that the work vehicle 1 has reached the traveling termination end between the crop rows when the measured traveling distance reaches the aforementioned predetermined distance. The automatic travel control unit 32 may start measuring time when the work vehicle 1 reaches the front position by a predetermined distance from the traveling termination end between the target crop row pair, and may determine that the work vehicle 1 has reached the traveling termination end between the crop rows when a time required for the work vehicle 1 to travel the predetermined distance has elapsed.

If the work vehicle 1 has not reached the traveling termination end between the target crop row pair (step S13: NO), the automatic travel control unit 32 returns to step S2.

In step S13, if it is determined that the work vehicle 1 has reached the traveling termination end between the target crop row pair (step S13:YES), the automatic travel control unit 32 turns the work vehicle 1 in order to move the work vehicle 1 to the traveling start end between the next crop rows (step S14). Specifically, the automatic travel control unit 32 controls the crawler control mechanism 15 to turn the work vehicle 1 approximately 180 degrees in a predetermined turning direction. The turning radius is set to 1/2 of the row interval W stored in the memory 31.

The predetermined turning direction is determined on the basis of the preset turning direction at the first traveling termination end and information on the number of turns as of the current turn. For example, when the turning direction at the first traveling termination end is to the right, if the current turn is an odd number, the turning direction is to the right, and if the current turn is an even number, the turning direction is to the left. On the other hand, when the turning direction at the first traveling termination end is to the left, if the current turn is an odd number, the turning direction is to the left, and if the current turn is an even number, the turning direction is to the right.

When the process of step S14 is completed, the automatic travel control unit 32 returns to step S2.

In step S2, when it is determined that the number of turns of the work vehicle 1 has reached the target number of turns N (step S2: YES), the automatic travel control unit 32 ends the automatic travel control.

In the flowchart of FIG. 14, the automatic travel control unit 32 returns to step S2 after the turning in step S14, but may return to step S1 after the turning in step S14. In this case, after the turning in step S14, the operation mode is set to the search mode, and thus the work vehicle is temporarily stopped.

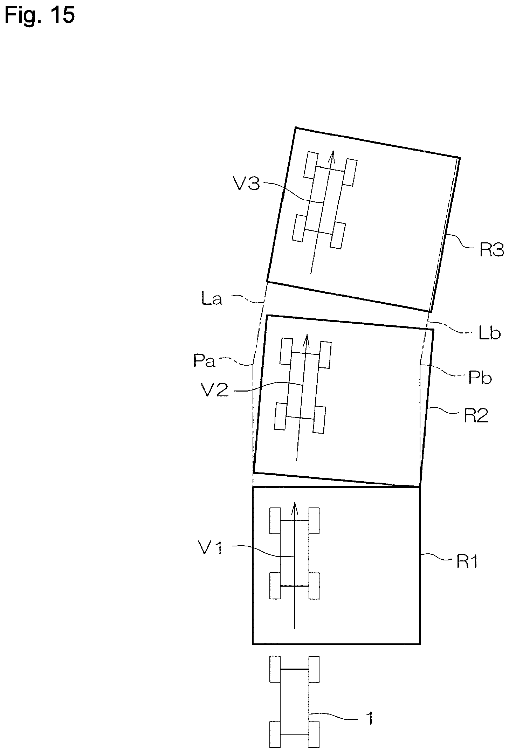

Depending on the field H, the adjacent crop rows L may not be straight but may be bent in the middle. In other words, the slopes of the adjacent crop rows L may change in the middle. In such a case, it is necessary to change the direction (target direction) of the target travel route of the work vehicle 1 in accordance with the change in the slopes of the adjacent crop rows L. In the aforementioned embodiment, since the target direction (reference direction) is updated on the basis of the rectangle identified by the crop row identification process (see step S3) during automatic traveling, the target direction of the work vehicle 1 can be changed in accordance with the change in the slopes of the crop rows. In this respect, the description will be given with the use of FIG. 15.

In FIG. 15, the two crop rows La and Lb constituting the target crop row pair are respectively bent to the right near intermediate positions Pa and Pb in the length direction. The work vehicle 1 is assumed to automatically travel between the crop rows La and Lb from the lower side to the upper side of the paper surface of FIG. 15. For convenience of explanation, it is assumed that the lower side end between the crop rows in FIG. 15 is the traveling start point and the upper side end between the crop rows is the traveling end point.

First, the automatic travel control unit 32 identifies a first rectangle R1 corresponding to the portion from the traveling start point between the crop rows La and Lb to bending points Pa and Pb of the crop rows La and Lb. The slope (target direction) of both the right and left sides of the first rectangle R1 is an angle according to the average slope of the portion from the traveling start point in the crop rows La and Lb to the bending points Pa and Pb of the crop rows La and Lb. Therefore, the work vehicle 1 travels as indicated by an arrow V1.

When the work vehicle 1 approaches the bending points Pa and Pb of the crop rows La and Lb, the automatic travel control unit 32 identifies a second rectangle R2 corresponding to the portion including the bending points Pa and Pb in the crop rows La and Lb in the middle in the length direction. The slope (target direction) of both the right and left sides of the second rectangle R2 is an angle according to the average slope of the portion including the bending points Pa and Pb in the crop rows La and Lb in the middle in the length direction. Therefore, the slope of the second rectangle R2 is an angle inclined to the right toward the traveling direction with respect to the slope of the first rectangle R1. As a result, the target direction (reference direction) is corrected to the right side toward the traveling direction. Therefore, the work vehicle 1 travels as indicated by an arrow V2.

When the work vehicle 1 passes through the bending points Pa and Pb of the crop rows La and Lb, the automatic travel control unit 32 identifies a third rectangle R3 corresponding to a portion further to the traveling termination end side than the bending points Pa and Pb in the crop rows La and Lb. The slope (target direction) of both the right and left sides of the third rectangle R3 is an angle according to the average slope of the portion further to the traveling termination end side than the bending points Pa and Pb in the crop rows La and Lb. Therefore, the slope of the third rectangle R3 is an angle further inclined to the right toward the traveling direction with respect to the slope of the second rectangle R2. As a result, the target direction (reference direction) is corrected to the right side toward the traveling direction. Therefore, the work vehicle 1 travels as indicated by an arrow V3. In this way, the work vehicle 1 travels along the target travel route according to the shape of the crop rows La and Lb even when the crop rows La and Lb are bent in the middle.

In addition, in the aforementioned embodiment, the distance sensor 13 using laser light acquires the distance information of each object, and the overhead image of the field H is generated on the basis of the acquired distance information. The crop row is identified on the basis of the generated overhead image. Therefore, the overhead image generated by this configuration is less susceptible to the environment of a field such as lighting conditions and seasons compared to an overhead image of a field generated on the basis of an image photographed by a camera. Consequently, in the aforementioned embodiment, it is possible to stably identify a crop row regardless of the environment of a field.

Moreover, in the aforementioned embodiment, a plurality of virtual points arranged in the crop row direction are created in each row candidate region, and a straight line corresponding to the crop row is identified from the plurality of virtual points. Therefore, even when detection points of objects other than crops such as weeds are included in the row candidate regions, it is possible to reduce the influence of such detection points of the objects other than crops when identifying the straight line corresponding to the crop row. This makes it possible to identify a crop row with high accuracy.

Specifically, the row candidate region generating unit 52 and the crop row identifying unit 53 illustrated in FIG. 5 generate one or more row candidate regions including two or more detection points located within a predetermined distance, and estimate a straight line corresponding to the row candidate regions from a plurality of virtual points created for the generated row candidate regions. Therefore, even when detection points of objects other than crops such as weeds are included in the row candidate regions, it is possible to reduce the influence of such detection points of the objects other than crops when identifying a straight line corresponding to the row candidate regions. This makes it possible to identify a crop row with high accuracy.

While the embodiment of the present invention has been described above, the present invention can be implemented in other forms. For example, in the aforementioned embodiment, the work vehicle 1 is moved to the automatic travel start position by remote control. However, the work vehicle 1 may be transported to the automatic travel start position by a truck or the like. In addition, the work vehicle 1 may be manually operated and may be moved to the automatic travel start position by the manual operation.

Furthermore, in the aforementioned embodiment, the case where the work vehicle is a work vehicle for spraying a chemical liquid has been described, but the work vehicle may be a work vehicle for other than spraying a chemical liquid.

While the embodiment of the present invention has been described in detail, that is merely a specific example used for clarifying the technical content of the present invention, and the present invention should not be construed as limited to the specific example, but the scope of the invention is limited only by the appended claims.

DESCRIPTION OF REFERENCE NUMERALS

1 work vehicle
13 distance sensor
14 direction sensor
30 control device
31 memory
32 automatic travel control unit
41 crop row identification processing unit
51 overhead image generating unit
52 row candidate region generating unit
52A shading processing unit
52B selecting unit
53 crop row identifying unit
53A straight line combining unit
53B straight line combining unit

**Claims**

1. A work vehicle configured to travel in a field where a crop row is planted, the work vehicle comprising:

   a distance sensor configured to irradiate a plurality of objects present in the field with laser light and receive reflected light from the objects to thereby acquire distance information of each of the objects;
   an overhead image generating unit configured to detect a position of each of the objects on a basis of the distance information and generate an overhead image including the detected position of each of the objects as a detection point;
   a row candidate region generating unit configured to combine two or more detection points located within a predetermined distance from among the detection points included in the overhead image to thereby generate one or more row candidate regions extending in a crop row direction; and
   a crop row identifying unit configured to create a plurality of virtual points arranged in the crop row direction in each of the row candidate regions and identify straight lines corresponding to the crop row from the plurality of virtual points.

2. The work vehicle according to claim 1, the row candidate region generating unit comprising:

   a shading processing unit configured to perform, on the overhead image, a shading process for expanding images of the detection points to combine a plurality of neighboring detection points, to generate one or more cluster images; and
   a selecting unit configured to select from the cluster images, an image that fulfills a predetermined selection condition, as a row candidate region.

3. The work vehicle according to claim 1 or 2, wherein the virtual points include, in the row candidate regions, a first virtual point arranged at both ends in the crop row direction, and a second virtual point including one point arranged between the both ends in the crop row direction or a plurality of points arranged between the both ends in the crop row direction at predetermined intervals.

4. The work vehicle according to claim 3, wherein the first virtual point and the second virtual point arranged in the row candidate regions are created on a basis of an approximate quadrangle of the row candidate regions.

5. The work vehicle according to any one of claims 1 to 4, the crop row identifying unit comprising:

   a straight line estimating unit configured to estimate, for each of the row candidate regions, a straight line corresponding to the row candidate regions from the plurality of virtual points created for the row candidate regions; and
   a straight line combining unit configured to combine straight lines that mutually fulfill a predetermined combining condition from among straight lines corresponding to each of the row candidate regions estimated by the straight line estimating unit to thereby generate a straight line corresponding to the crop row.

6. The work vehicle according to any one of claims 1 to 5,

   wherein the crop row identifying unit is configured to identify at least two crop rows, and
   wherein the work vehicle further includes a rectangle identification unit configured to identify a rectangle having the two crop rows as long sides when a distance between centers of gravity of the two crop rows is within a predetermined range.

7. A crop row identification program for identifying a crop row planted in a field, the crop row identification program causing a computer to function as:

   an overhead image generating unit for detecting a position of each of the objects on a basis of information on a distance from a predetermined reference position to each of a plurality of objects present in the field and generate an overhead image including a detection point of each of the detected objects;

a row candidate region generating unit for combining two or more detection points located within a predetermined distance from among the detection points included in the overhead image to thereby generate one or more row candidate regions extending in a crop row direction; and

a crop row identifying unit for creating a plurality of virtual points arranged in the crop row direction in each of the row candidate regions, estimate straight lines corresponding to the row region candidate from the plurality of virtual points, and identify the crop row from the straight lines corresponding to each of the row candidate regions.

**Patentansprüche**

1. Arbeitsfahrzeug, das dazu ausgestaltet ist, sich auf einem Feld zu bewegen, wo eine Kulturpflanzenreihe gepflanzt ist, wobei das Arbeitsfahrzeug Folgendes umfasst:

   einen Abstandssensor, der dazu ausgestaltet ist, eine Vielzahl von Objekten, die auf dem Feld vorhanden sind, mit Laserlicht zu bestrahlen und reflektiertes Licht von den Objekten zu empfangen, um dadurch Abstandsinformationen von jedem der Objekte zu erfassen;
   eine Luftbild-Erzeugungseinheit, die dazu ausgestaltet ist, eine Position von jedem der Objekte auf einer Grundlage der Abstandsinformationen festzustellen und ein Luftbild zu erzeugen, das die festgestellte Position von jedem der Objekte als einen Feststellungspunkt umfasst;
   eine Reihenkandidatenregionserzeugungseinheit, die dazu ausgestaltet ist, zwei oder mehr Feststellungspunkte, die sich innerhalb eines vorbestimmten Abstands befinden, von unter den Feststellungspunkten, die in dem Luftbild enthalten sind, zu kombinieren, um dadurch eine oder mehrere Reihenkandidatenregionen zu erzeugen, die sich in einer Kulturpflanzenreihenrichtung erstreckt bzw. erstrecken; und
   eine Kulturpflanzenreihen-Identifikationseinheit, die dazu ausgestaltet ist, eine Vielzahl von virtuellen Punkten zu erzeugen, die in der Kulturpflanzenreihenrichtung in jeder von den Reihenkandidatenregionen angeordnet sind, und gerade Linien, die der Kulturpflanzenreihe entsprechen, von der Vielzahl von virtuellen Punkten zu identifizieren.

2. Arbeitsfahrzeug nach Anspruch 1, wobei die Reihenkandidatenregionserzeugungseinheit Folgendes umfasst:

   eine Schattierungsverarbeitungseinheit, die dazu ausgestaltet ist, auf dem Luftbild einen Schattierungsprozess zum Ausdehnen von Bildern der Feststellungspunkte durchzuführen, um eine Vielzahl von benachbarten Feststellungspunkten zu kombinieren, um ein oder mehrere Cluster-Bilder zu erzeugen; und
   eine Auswahleinheit, die dazu ausgestaltet ist, von den Cluster-Bildern ein Bild, das eine vorbestimmte Auswahlbedingung erfüllt, als eine Reihenkandidatenregion auszuwählen.

3. Arbeitsfahrzeug nach Anspruch 1 oder 2, wobei die virtuellen Punkte in den Reihenkandidatenregionen einen ersten virtuellen Punkt, der an beiden Enden in der Kulturpflanzenreihenrichtung angeordnet ist, und einen zweiten virtuellen Punkt umfassen, der einen Punkt, der zwischen den beiden Enden in der Kulturpflanzenreihenrichtung angeordnet ist, oder eine Vielzahl von Punkten umfasst, die zwischen den beiden Enden in der Kulturpflanzenreihenrichtung in vorbestimmten Intervallen angeordnet sind.

4. Arbeitsfahrzeug nach Anspruch 3, wobei der erste virtuelle Punkt und der zweite virtuelle Punkt, die in den Reihenkandidatenregionen angeordnet sind, auf einer Grundlage eines ungefähren Vierecks der Reihenkandidatenregionen erzeugt werden.

5. Arbeitsfahrzeug nach einem der Ansprüche 1 bis 4, wobei die Kulturpflanzenreihen-Identifikationseinheit Folgendes umfasst:

   eine Gerade-Linien-Schätzungseinheit, die dazu ausgestaltet ist, für jede der Reihenkandidatenregionen eine gerade Linie, die den Reihenkandidatenregionen entspricht, von der Vielzahl von virtuellen Punkten zu schätzen, die für die Reihenkandidatenregionen erzeugt werden; und
   eine Gerade-Linien-Kombinationseinheit, die dazu ausgestaltet ist, gerade Linien, die gegenseitig eine vorbestimmte Kombinationsbedingung erfüllen, unter geraden Linien, die jeder von den durch die Gerade-Linien-Schätzungseinheit geschätzten Reihenkandidatenregionen entsprechen, zu kombinieren, um dadurch eine gerade Linie zu erzeugen, die der Kulturpflanzenreihe entspricht.

6. Arbeitsfahrzeug nach einem der Ansprüche 1 bis 5,

   wobei die Kulturpflanzenreihen-Identifikationseinheit dazu ausgestaltet ist, mindestens zwei Kulturpflanzenreihen zu identifizieren, und wobei das Arbeitsfahrzeug ferner eine Rechteck-Identifikationseinheit umfasst, die dazu ausgestaltet ist, ein Rechteck zu identifizieren, das die zwei Kulturpflanzenreihen als lange Seiten aufweist, wobei ein Abstand zwischen Schwerpunkten der zwei Kulturpflanzenreihen innerhalb eines vorbestimmten Bereichs liegt.

7. Kulturpflanzenreihen-Identifikationsprogramm zum Identifizieren einer Kulturpflanzenreihe, die in einem Feld gepflanzt ist, wobei das Kulturpflanzenreihen-Identifikationsprogramm bewirkt, dass ein Rechner wirkt als:

eine Luftbild-Erzeugungseinheit zum Feststellen einer Position von jedem der Objekte auf einer Grundlage von Informationen über einen Abstand von einer vorbestimmten Bezugsposition zu jedem von einer Vielzahl von Objekten, die auf dem Feld vorhanden sind, und Erzeugen eines Luftbilds, das einen Feststellungspunkt von jedem der festgestellten Objekte umfasst; eine Reihenkandidatenregion-Erzeugungseinheit zum Kombinieren von zwei oder mehr Feststellungspunkten, die sich innerhalb eines vorbestimmten Abstands befinden, von unter den Feststellungspunkten, die in dem Luftbild enthalten sind, um dadurch eine oder mehrere Kandidatenregionen zu erzeugen, die sich in einer Kulturpflanzenreihenrichtung erstreckt bzw. erstrecken; und eine Kulturpflanzenreihen-Identifikationseinheit zum Erzeugen einer Vielzahl von virtuellen Punkten, die in der Kulturpflanzenreihenrichtung in jeder von den Reihenkandidatenregionen angeordnet sind, Schätzen gerader Linien, die dem Reihenregionkandidaten entsprechen, von der Vielzahl von virtuellen Punkten, und Identifizieren der Kulturpflanzenreihe von den geraden Linien, die jeder der Reihenkandidatenregionen entsprechen.

**Revendications**

1. Véhicule de travail configuré pour se déplacer dans un champ où une rangée de culture est plantée, le véhicule de travail comprenant :

un capteur de distance configuré pour irradier une pluralité d'objets présents dans le champ avec une lumière laser et recevoir une lumière réfléchie par les objets pour acquérir ainsi des informations de distance de chacun des objets ; une unité de génération d'images en plongée configurée pour détecter une position de chacun des objets sur la base des informations de distance et générer une image en plongée comportant la position détectée de chacun des objets comme point de détection ; une unité de génération de régions candidates de rangées configurée pour combiner deux points de détection ou plus situés à une distance prédéterminée, parmi les points de détection inclus dans l'image en plongée pour générer ainsi une ou plusieurs régions candidates de rangées s'étendant dans une direction de rangée de culture ; et une unité d'identification de rangées de culture configurée pour créer une pluralité de points virtuels agencés dans la direction de rangée de culture dans chacune des régions candidates de rangées et identifier des lignes droites correspondant à la rangée de culture à partir de la pluralité de points virtuels.

2. Véhicule de travail selon la revendication 1, l'unité de génération de régions candidates de rangées comprenant :

une unité de traitement de flou configurée pour réaliser, sur l'image en plongée, un processus de flou pour étendre les images des points de détection afin de combiner une pluralité de points de détection voisins, pour générer une ou plusieurs images en grappe ; et une unité de sélection configurée pour sélectionner, à partir des images en grappe, une image qui remplit une condition de sélection prédéterminée, comme région candidate de rangée.

3. Véhicule de travail selon la revendication 1 ou 2, dans lequel les points virtuels comportent, dans les régions candidates de rangées, un premier point virtuel agencé aux deux extrémités dans la direction de rangée de culture, et un deuxième point virtuel comportant un point agencé entre les deux extrémités dans la direction de rangée de culture, ou une pluralité de points agencés entre les deux extrémités dans la direction de rangée de culture à des intervalles prédéterminés.

4. Véhicule de travail selon la revendication 3, dans lequel le premier point virtuel et le deuxième point virtuel agencés dans les régions candidates de rangées sont créés sur la base d'un quadrilatère approximatif des régions candidates de rangées.

5. Véhicule de travail selon l'une quelconque des revendications 1 à 4, l'unité d'identification de rangées de culture comprenant :

une unité d'estimation de lignes droites configurée pour estimer, pour chacune des régions candidates de rangées, une ligne droite correspondant aux régions candidates de rangées à partir de la pluralité de points virtuels créés pour les régions candidates de rangées ; et

une unité de combinaison de lignes droites configurée pour combiner des lignes droites qui remplissent une condition de combinaison prédéterminée parmi des lignes droites correspondant à chacune des régions candidates de rangées estimées par l'unité d'estimation de lignes droites pour générer ainsi une ligne droite correspondant à la rangée de culture.

6. Véhicule de travail selon l'une quelconque des revendications 1 à 5,

dans lequel l'unité d'identification de rangées de culture est configurée pour identifier au moins deux rangées de culture, et

dans lequel le véhicule de travail comporte en outre une unité d'identification de rectangles configurée pour identifier un rectangle ayant les deux rangées de culture comme côtés longs lorsqu'une distance entre les centres de gravité des deux rangées de culture est dans une plage prédéterminée.

7. Programme d'identification de rangées de culture pour identifier une rangée de culture plantée dans un champ, le programme d'identification de rangées de culture amenant un ordinateur à fonctionner comme :

une unité de génération d'images en plongée pour détecter une position de chacun des objets sur la base d'informations sur une distance entre une position de référence prédéterminée et chacun d'une pluralité d'objets présents dans le champ et générer une image en plongée comportant un point de détection de chacun des objets détecté ;

une unité de génération de régions candidates de rangées pour combiner deux points de détection ou plus situés à une distance prédéterminée parmi les points de détection inclus dans l'image en plongée pour générer ainsi une ou plusieurs régions candidates de rangées s'étendant dans une direction de rangée de culture ; et

une unité d'identification de rangées de culture pour créer une pluralité de points virtuels agencés dans la direction de rangée de culture dans chacune des régions candidates de rangées, estimer des lignes droites correspondant à la région candidate de rangée à partir de la pluralité de points virtuels, et identifier la rangée de culture à partir des lignes droites correspondant à chacune des régions candidates de rangées.

Fig. 1

Fig. 2

Fig. 3

# Fig. 4

CONTROL DEVICE — 30 — 32

AUTOMATIC TRAVEL CONTROL UNIT

- DISTANCE SENSOR — 13
- DIRECTION SENSOR — 14
- COMMON RAIL DEVICE — 16
- ENGINE CONTROLLER — 21
- CRAWLER CONTROL MECHANISM — 15
- TRAVEL CONTROLLER — 22
- PUMP UNIT — 9
  - PUMP — 9A
  - CLUTCH MECHANISM — 9B
- CLUTCH ACTUATOR — 23
- STORAGE UNIT — 24

CROP ROW IDENTIFICATION PROCESSING UNIT — 41

TARGET CROP ROW PAIR EXTRACTION UNIT — 42

RECTANGLE IDENTIFICATION UNIT — 43

TARGET SETTING UNIT — 44

DEVIATION CALCULATION UNIT — 45
- POSITION DEVIATION CALCULATION UNIT — 45A
- DIRECTION DEVIATION CALCULATION UNIT — 45B

CORRECTION UNIT — 46
- POSITION CORRECTION UNIT — 46A
- DIRECTION CORRECTION UNIT — 46B

MEMORY — 31

## Fig. 5

41

CROP ROW IDENTIFICATION PROCESSING UNIT

| OVERHEAD IMAGE GENERATING UNIT | 51 |

ROW CANDIDATE REGION GENERATING UNIT — 52

| SHADING PROCESSING UNIT | 52A |

| SELECTING UNIT | 52B |

CROP ROW IDENTIFYING UNIT — 53

| STRAIGHT LINE ESTIMATING UNIT | 53A |

| STRAIGHT LINE COMBINING UNIT | 53B |

## Fig. 6

Fig. 7

Fig. 8

Fig. 9

# Fig. 10

Fig. 11A

Fig. 11B

Fig. 11C

Fig. 11D

Fig. 12

Fig. 13

Fig. 14

START AUTOMATIC
TRAVEL CONTROL

S1

Mode = SEARCH

S2

NUMBER OF
TURNS ≥N? ——YES——→ END AUTOMATIC
TRAVEL CONTROL

NO

S3

CROP ROW
IDENTIFICATION PROCESS

S5                    S4

NO——SEARCH    ←NO——CROP ROW
Mode                  DETECTION
?                     IS SUCCESSFUL?

YES                   YES

S6                    S7

MOVE WORK VEHICLE     UPDATE ROW
INTERVAL W

YES——SEARCH    S8
Mode
?

S9    SET REFERENCE
DIRECTION            NO

S10   Mode = RUN

CROP ROW            S11
YES——DETECTION HAS SUCCEEDED
AT LEAST PREDETERMINED NUMBER
OF TIMES IN SUCCESSION?

S12   UPDATE REFERENCE
DIRECTION            NO

S13
YES——HAS REACHED
TRAVELING
TERMINATION
END?

S14   TURN              NO

32

Fig. 15

**EP 3 766 322 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8855405 B
- US 8150574 B
- US 201532169
- CN 102881219 A
- JP 2010108135 A